# EUROPÄISCHE PATENTANMELDUNG

(11) **EP 0 984 453 A2**
(43) Veröffentlichungstag der Anmeldung: **08.03.2000**
(21) Anmeldenummer: 99115590.4
(22) Anmeldetag: 06.08.1999
(51) Int. Cl.: G11B 33/04, G11B 23/40

(54) **Kassette zur Aufnahme eines Informationsträgers sowie Verfahren und Einrichtung zum Bedrucken derselben**

(30) Priorität: 04.09.1998 DE 19840391
(71) Anmelder: SONOPRESS PRODUKTIONSGESELLSCHAFT FÜR TON- UND INFORMATIONSTRÄGER mbH, 33332 Gütersloh (DE)
(72) Erfinder: Brylowski, Richard, 33330 Gütersloh (DE)
(74) Vertreter: Schaumburg, Thoenes & Thurn

(57) **Zusammenfassung**

Die Erfindung betrifft eine Kassette (10) aus Kunststoff zur Aufnahme mindestens eines Informationsträgers (12), insbesondere einer Compact Disc oder einer Digital Versatile Disc, mit einem zu öffnenden Deckel (24) und einem Boden (14). Zumindest auf einer der Flachseiten (38, 44; 48, 56) des Deckels (24) und/oder des Bodens (14) ist ein farbiger Aufdruck (40; 50) vorgesehen, der ein chemisch ausgehärtetes Bindemittel enthält, in dem die Farbpigmente eingebettet sind und das zumindest teilweise mit der Kunststoffoberfläche der bedruckten Flachseite (38, 44; 48, 56) vernetzt ist.

## Beschreibung

Die Erfindung betrifft eine Kassette aus Kunststoff zur Aufnahme mindestens eines Informationsträgers, insbesondere einer Compact Disc oder einer Digital Versatile Disc, mit einem zu öffnenden Deckel und einem Boden, wobei zumindest auf einer der Flachseiten des Deckels und/oder des Bodens ein farbiger Aufdruck vorgesehen ist. Ferner betrifft die Erfindung ein Verfahren nach dem Oberbegriff des Anspruchs 7 sowie eine Einrichtung nach dem Oberbegriff des Anspruchs 13 zum Bedrucken einer derartigen Kassette.

In einer Kassette der eingangs genannten Art werden Informationsträger wie beispielsweise Compact Discs, Digital Versatile Discs, Audio- oder Videokassetten aufbewahrt, um sie einerseits vor äußeren Einflüssen zu schützen und sie andererseits in einer den Kunden ansprechenden Verpackung bereitzustellen.

So ist aus der EP-A-0 630 019 bzw. der EP-B-0 515 342 eine aus Kunststoff gefertigte Kassette bekannt, in der eine einzelne Compact Disc aufbewahrt werden kann. Die Kassette hat einen Boden, an dem die Compact Disc während des Aufbewahrens gehalten wird, und einen schwenkbar mit dem Boden verbundenen Deckel.

Die DE-A-33 01 644 beschreibt eine Kassette, in der bis zu vier Compact Discs aufgenommen werden können. Die Kassette besteht aus einem Mittelteil, das an jeder seiner beiden Flachseiten eine Zapfenanordnung hat, auf die eine Compact Disc zum Halten aufgesteckt werden kann. Jede Flachseite ist ferner durch einen am Mittelteil schwenkbar befestigten Deckel verschließbar, an dem gleichfalls eine Zapfenanordnung ausgebildet ist, an der jeweils eine weitere Compact Disc gehalten werden kann.

Um einerseits der Kassette ein gefälliges Aussehen zu geben, das den Kunden zum Kauf des Produktes anregen soll, andererseits den Kunden über den in der Kassette verpackten Informationsträger zu informieren, ist es ferner üblich geworden, in die Kassette bedruckte Einlagen, sogenannte Covercards, Inlays oder Booklets, einzulegen. Die bedruckten Einlagen werden in die an der Kassette vorgesehenen Halterungen oder Laschen eingeführt oder zwischen dem Deckel bzw. dem Boden der Kassette und einem mit diesem verrasteten Einsatz geklemmt.

So beschreibt die DE-A-41 36 856 eine Verpackung für Compact Discs, die aus einem Boden und einem schwenkbar am Boden befestigten, aus transparentem Kunststoff gefertigten Deckel besteht. Von jeder der beiden einander gegenüber angeordneten Seitenkanten des Deckels stehen zwei Laschen ab, die mit der Innenseite des Deckels einen Spalt zur Aufnahme einer bedruckten Einlage bilden.

Aus der EP-A-0 077 019 ist eine Aufbewahrungskassette für Compact Discs bekannt, bei der an dem mit dem Bodenteil schwenkbar verbundenen, aus einem transparentem Kunststoff gefertigten Deckelteil eine Innentasche ausgebildet ist, in die ein separater Plattenbehälter eingeführt werden kann, der auf seiner Außenseite einen bedruckten Einband trägt.

Die Verwendung von bedruckten Einlagen hat jedoch den Nachteil, daß in den Kassetten entweder entsprechende Halterungen oder Laschen ausgebildet oder separate Einsätze befestigt sein müssen, mit denen die Einlagen in der Kassette gehalten werden, so daß die Herstellung der Kassette verglichen mit Kassetten ohne Einlagen aufwendiger ist. Ferner müssen die Einlagen durch Vorrichtungen oder von Hand in die Kassette eingelegt werden, so daß sich die Herstellung der Kassette weiter verteuert. Aus diesem Grund wurden immer wieder Versuche unternommen, die Sichtflächen der aus Kunststoff gefertigten Kassetten mit farbigen Aufdrucken zu versehen, um auf die Verwendung bedruckter Einlagen verzichten zu können.

So ist aus der EP-A-0 086 484 eine Kassette zur Aufbewahrung von Compact Discs bekannt, die aus zwei schwenkbar miteinander verbundenen Kassettenteilen besteht, die zum Aufbewahren der Compact Disc zusammengeklappt werden und die Compact Disc zwischen sich einklemmen. Die zusammengeklappten Kassettenteile werden in einen kassettenförmigen, aus einem farbigen Kunststoff gefertigten Behälter geschoben, dessen Flachseiten bedruckt bzw. beschriftet sind.

Seit kurzem wird auch eine aus einem farbigen Kunststoff gefertigte Kassette für Compact Discs angeboten, die aus einem Boden und einem schwenkbar mit diesem verbundenen Deckel besteht, wobei die nach außen zeigenden Flachseiten des Deckels und des Bodens einfarbig bedruckt sind.

Bei diesen bedruckten Kassetten besteht das Problem, daß die Kunststoffoberflächen der bedruckten Flachseiten sehr glatt sind, so daß die verwendeten Farben meist nur ungenügend anhaften und die Aufdrucke nach kurzer Zeit verwischen. Die Verwendung lösungsmittelhaltiger Farben zum Bedrucken der Kunststoffoberflächen, die besser an den Oberflächen anhaften, hat den Nachteil, daß die in den Farben enthaltenen Lösungsmittel die glatten Kunststoffoberflächen angreifen und teilweise anätzen, so daß die an sich glatte Kunststoffoberfläche um die bedruckten Bereiche matt erscheint. Um die angeätzten Bereiche zu kaschieren, werden die Kassetten deshalb aus farbigem Kunststoff gefertigt und mit einem in einem ähnlichen Farbton gehaltenen Aufdruck bedruckt. Kassetten aus transparenten Kunststoffmaterialien können dagegen mit lösungsmittelhaltigen Farben nicht bedruckt werden, da die angeätzten Bereiche für den Betrachter sofort erkennbar sind.

Es ist Aufgabe der Erfindung, eine aus Kunststoff gefertigte Kassette zur Aufbewahrung von Informationsträgern bzw. ein Verfahren sowie eine Einrichtung zum Bedrucken einer derartigen Kassette bereitzustellen, deren Kunststoffoberflächen mit einem gut anhaftenden, die Kunststoffoberflächen schonenden Aufdruck bedruckt werden können.

Diese Aufgabe wird bei einer Kassette der eingangs genannten Art dadurch gelöst, daß der Aufdruck ein chemisch ausgehärtetes Bindemittel enthält, in dem die Farbpigmente eingebettet sind und das zumindest teilweise mit der Kunststoffoberfläche der bedruckten Flachseite vernetzt ist. Ferner wird die Aufgabe durch ein Verfahen mit den Merkmalen nach Anspruch 7 bzw. durch eine Einrichtung mit den Merkmalen nach Anspruch 13 gelöst. Vorteilhafte Weiterbildungen ergeben sich aus den von den jeweiligen Hauptansprüchen abhängigen Unteransprüchen.

Bei der Erfindung wird für den Aufdruck ein Farbentyp verwendet, dessen Bindemittel chemisch aushärtet, d.h. bei dem das Bindemittel durch eine chemische Reaktion der Ausgangsstoffe des Bindemittels aushärtet und sich die Ausgangsstoffe des Bindemittels durch die chemische Reaktion sowohl miteinander als auch mit den Kunststoffoberflächen der bedruckten Bereiche der Flachseite vernetzen. Im Gegensatz zur physikalischen Aushärtung, bei der im Bindemittel enthaltene Lösungsmittel verdunsten und sich das Bindemittel ohne chemische Veränderung verfestigt, sind bei der chemischen Aushärtung keine Lösungsmittel erforderlich, so daß eine ungewollte Beschädigung der Kunststoffoberflächen vermieden wird und diese schonend bedruckt werden können, ohne daß der Aufdruck nachträglich verwischt werden kann.

So eignen sich zum Bedrucken der Kunststoffoberflächen der Kassette Farben, deren Bindemittel durch Oxidation mit Luftsauerstoff oder durch elektromagnetische Strahlung wie Infrarot-Strahlung, UV-Licht oder auch Elektronenstrahlung aushärten. Ferner können zum Bedrucken auch Farben verwendet werden, deren Bindemittel aus zwei Komponenten bestehen, die unmittelbar vor dem Bedrucken miteinander vermengt werden und nach dem Bedrucken auf der Kunststoffoberfläche miteinander reagieren und aushärten.

Bei den durch elektromagnetische Strahlung aushärtenden Bindemitteln kann zwischen Bindemitteln unterschieden werden, deren Ausgangsstoffe durch eine von Radikalen oder von Ionen ausgelöste Polymerisationsreaktion bzw. Polyadditionsreaktion miteinander vernetzen. So werden für radikal polymerisierbare Bindemittel vorwiegend ungesättigte Acryl- und Methacryl modifizierte Polyester-, Epoxid- und Urethanharze als Ausgangsstoffe verwendet. Bei ionisch polymerisierbaren Bindemitteln werden dagegen cycloaliphatische oder aromatische Epoxidharze des Bisphenol A-Typs eingesetzt.

Für den Deckel und/oder den Boden der Kassette wird vorzugsweise ein transparentes Kunststoffmaterial verwendet, um der Kassette ein gefälliges Aussehen zu geben. Als Kunststoffmaterial eignet insbesondere Polystyrol, das einerseits problemlos mit den oben beschriebenen Farben bedruckt werden kann, andererseits über eine ausreichend hohe Elastizität verfügt, um eventuell auftretenden stoßartigen Belastungen widerstehen zu können, die am Deckel oder Boden angreifen.

Bei einer bevorzugten Weiterbildung der Erfindung hat der vorzugsweise transparente Deckel der Kassette zwei von seiner Innenseite abstehende, parallel mit Abstand zueinander verlaufende Seitenkanten, wobei von jeder Seitenkante mindestens eine in Richtung der gegenüberliegenden Seitenkante zeigende Lasche so absteht, daß zwischen der Lasche und der Innenseite des Deckels ein Spalt zur Aufnahme einer bedruckten Einlage gebildet ist. Gemeinsam mit dem auf dem Deckel vorgesehenen Aufdruck wird durch das Zusammenwirken des Aufdrucks mit der bedruckten Einlage beim Betrachter der Kassette ein dreidimensionaler Eindruck erweckt. Zum gleichen Zweck kann auch der Boden mit entsprechenden Laschen oder Halterungen versehen sein, um eine bedruckte Einlage in der Kassette zu halten, die mit dem auf der Flachseite des Bodens aufgedruckten Bild zusammenwirkt.

Anstelle Halterungen oder Laschen am Boden der Kassette vorzusehen, wird bei einer Weiterbildung der Ausführungsform in den vorzugsweise transparenten Boden ein mit diesem lösbar verbundener Einsatz eingelegt, der in seinem Zentrum eine aus mehreren federnden Segmenten gebildete Zapfenanordnung zum Halten des scheibenförmigen Informationsträgers hat. Der Einsatz ist dabei mit einem solchen Abstand zur Innenseite des Bodens angeordnet, daß zwischen der Innenseite des Bodens und dem Einsatz ein Zwischenraum zur Aufnahme einer bedruckten zweiten Einlage gebildet ist.

Zum Bedrucken der Kassette wird eine zähflüssige Farbe verwendet, die, wie oben bereits erläutert, durch chemische Reaktionen aushärtet, ohne daß die Kunststoffoberfläche der Kassette angegriffen wird.

Aufgrund ihrer extrem niedrigen Härtungszeiten, die im Sekundenbereich liegen, eignen sich zum Bedrucken der Kassetten insbesondere zähflüssige Farben, deren Bindemittel durch UV-Licht aushärten. Um die Aushärtung radikal polymerisierender Bindemittel zu starten und zu beschleunigen, werden vorzugsweise Farben verwendet, deren Bindemittel einen Photoinitiator enthalten, dessen Reaktionsprodukte nach dem Aushärten in das vernetzte Bindemittel eingebunden sind. Als Photoinitiatoren werden insbesondere organische Peroxide verwendet, die durch UV-Licht in Radikale zerfallen, welche die Polymerisation der Ausgangsstoffe des Bindemittels beschleunigen bzw. starten.

Um die Verarbeitungsviskosität der Farbe für das Bedrucken der Kassette einstellen zu können, wird der Farbe vor dem Bedrucken vorzugsweise ein reaktiver Verdünner beigemengt, der den Härtungsvorgang des Bindemittels unterstützt und in das Bindemittel beim Aushärten eingebaut wird. Als reaktiver Verdünner eignet sich beispielsweise Vinyltoluol, Divenylbenzol, Allylester oder ähnliche Monomere, die jeweils mit einem Anteil zwischen 1 und 5 Gewichtsprozenten bezogen auf die Gesamtfarbmenge dem Bindemittel zugegeben werden.

Zum Bedrucken der Kassette wird ein Siebdruck- oder Tampondruckverfahren vorgeschlagen, bei dem die Kunststoffoberfläche schonendauch mehrfarbig bedruckt werden kann.

Das Bedrucken der Kassette erfolgt in einer Einrichtung , die eine Druckstation und eine in der Druckstation angeordnete Spannstation hat, in der der Deckel und/oder der Boden der Kassette während des Bedruckens gehalten wird. Weil das für den Deckel oder den Boden der Kassette verwendete Kunststoffmaterial normalerweise sehr elastisch ist, wäre ein Bedrucken der Flachseiten des Deckels bzw. des Bodens, insbesondere mit mehreren Farben in aufeinander folgenden Arbeitsschritten, nicht möglich, da der Deckel bzw. der Boden beim Bedrucken nachgeben und zwischen den aufgedruckten Farbschichten ein Versatz auftretenden würde. Um die Kassette dennoch bedrucken zu können, wird vorgeschlagen, die Spannstation als Vakuumtisch mit einer ebenen Haltefläche auszubilden, in dem mehrere mit einer Unterdruckquelle verbundene Vakuumkanäle vorgesehen sind, die an der Haltefläche des Vakuumtisches enden. Die zu bedruckenden Einzelteile der Kassette wie der Deckel oder der Boden können dann entweder einzeln oder zusammengesetzt und in aufgeklapptem Zustand auf der Haltefläche positioniert und durch den Unterdruck während des Bedruckens gehalten werden, wobei die Haltefläche den Deckel und/oder den Boden an seiner der zu bedruckenden Flachseite abgewandten Flachseite abstützt.

Die Druckstation der Einrichtung ist vorzugsweise eine Siebdruckstation, mit der problemlos mehrfarbige Aufdrucke auf den Deckel und den Boden der Kassette aufgebracht werden können.

Nachfolgend wird die Erfindung unter Bezugnahme auf die Zeichnung näher erläutert. Darin zeigen:
- Figur 1: eine perspektivische Darstellung einer Kassette zur Aufnahme einer Compact Disc, deren Deckel auf der Vorderseite bedruckt ist,
- Figur 2: eine vergrößerte Einzelheit des Deckels der Kassette nach Figur 1 in geschnittener Darstellung,
- Figur 3: eine vergrößerte Einzelheit des Bodens der Kassette nach Figur 1 in geschnittener Darstellung, und
- Figur 4: eine geschnittene Seitenansicht einer Druckstation zum Bedrucken von Kassetten für Compact Discs.

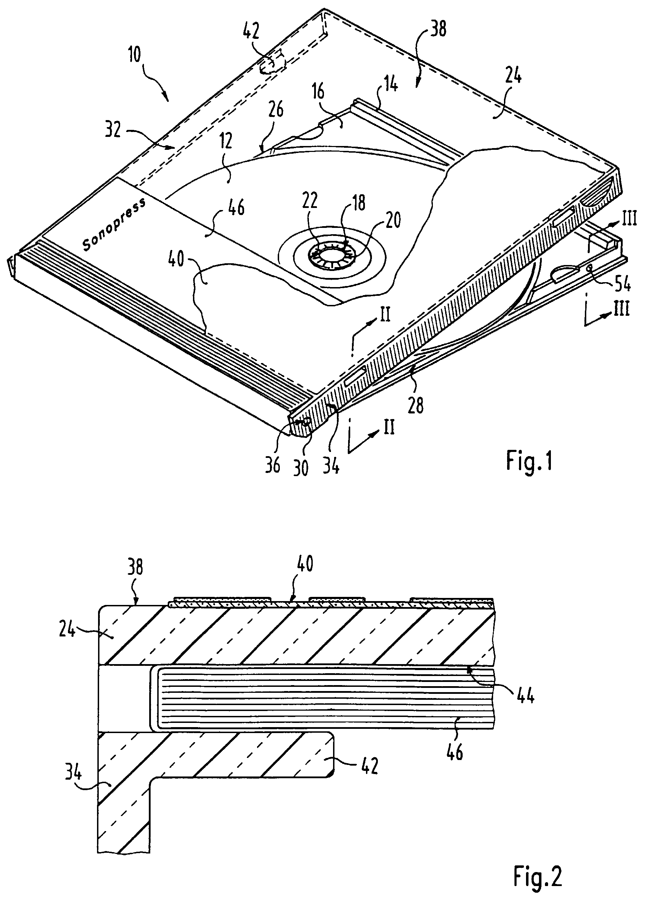

Figur 1 zeigt in perspektivischer Darstellung eine Kassette 10 zur Aufnahme einer Compact Disc 12. Die Kassette 10 hat ein aus transparentem Polystyrol gefertigtes Bodenteil 14, in das ein Einsatz 16 aus gefärbtem oder transparentem Polystyrol eingelegt ist. Der Einsatz 16 ist mit dem Bodenteil 14 verrastet und hat in seinem Zentrum eine Zapfenanordnung 18, die aus mehreren federnden Segmenten 20 gebildet ist. Die Zapfenanordnung 18 dient als Halterung, auf die die Compact Disc 12 mit ihrer Zentrieröffnung 22 aufgesetzt und verrastet werden kann.

An seiner in Figur 1 links dargestellten Seitenkante ist am Bodenteil 14 ein gleichfalls aus transparentem Polystyrol gefertigter Deckel 24 schwenkbar gelagert. Zu diesem Zweck stehen von den einander entgegengesetzten Seitenwänden 26 und 28 des Bodenteils 14 zwei miteinander fluchtende Zapfen 30 ab, von denen in Figur 1 nur der an der unteren Seitenwand 28 vorgesehene Zapfen 30 zu sehen ist. Die Zapfen 30 des Bodenteils 14 stehen mit zwei an den einander entgegengesetzten Seitenkanten 32 und 34 des Deckels 24 ausgebildeten Öffnungen 36 in Eingriff, von denen gleichfalls in Figur 1 nur die an der unteren Seitenkante 34 des Deckels 24 ausgebildete Öffnung 36 dargestellt ist.

Wie die Figuren 1 und 2 zeigen, ist die Vorderseite 38 des Deckels 24 mit einem mehrlagigen Aufdruck 40 versehen. Der Aufdruck 40 ist aus einem verschiedenfarbige Pigmente enthaltenden, durch UV-Licht ausgehärteten Polyesteracrylat gebildet, das mit der Kunststoffoberfläche des Deckels 24 teilweise vernetzt ist, wie nachfolgend erläutert wird.

Vor dem Bedrucken der Kunststoffoberfläche des Deckels 24 wird der Farbe, die ein organisches Peroxid als Photoinitiator enthält, Vinyltoluol als reaktiver Verdünner beigemengt, um die Verarbeitungsviskosität der Farbe zu verbessern. Danach wird der Deckel 24 in einem Siebdruckverfahren mit der so vorbehandelten Farbe bedruckt und anschließend mit UV-Licht bestrahlt. Durch das UV-Licht zerfällt der Photoinitiator in Radikale, die ihrerseits die Polymerisation des Bindemittels und damit das Aushärten der Farbe in Gang setzen. Das beigemengte Vinyltoluol reagiert während des Aushärtens einerseits mit den Ausgangsstoffen des Bindemittels und andererseits mit dem Polystyrol des Deckels 24, wobei die von der Farbe benetzten Bereiche geringfügig angeätzt werden, wie durch den vertieften Oberflächenabschnitt, an dem der Aufdruck 40 anhaftet, angedeutet ist, um die Vernetzung des Bindemittels mit der Kunststoffoberfläche des Deckels 24 zu erhöhen. Sobald die Polymerisation abgeschlossen ist, ist das Vinyltoluol im Bindemittel eingebunden.

Da das Aushärten der aufgedruckten Farbe innerhalb weniger Sekunden abgeschlossen ist, kann der Deckel 24 mit weiteren Farben, die dasselbe Bindemittel enthalten, bedruckt werden. Dabei werden die unterschiedlichen Mischfarben des Aufdrucks 40 durch die Grundfarben Rot, Gelb, Blau und Schwarz erzeugt.

Wie die Figuren 1 und 2 weiter zeigen, stehen von den beiden Seitenkanten 32 und 34 des Deckels 24 jeweils zwei Laschen 42 in Richtung der jeweils gegenüberliegenden Seitenkante 34 bzw. 32 ab und bilden mit der Innenseite 44 des Deckels 24 einen Spalt, in dem ein bedrucktes Booklet 46 aus Karton gehalten ist. Durch das Zusammenwirken des Aufdrucks 40 und des bedruckten Booklets 46 entsteht bei dem Betrachter der Kassette 10 der Eindruck einer dreidimensionalen Darstellung. Dabei ist zu bemerken, daß gegebenenfalls auch die Innenseite 44 des Deckels 24 bedruckt sein kann, um diesen Effekt noch zu erhöhen.

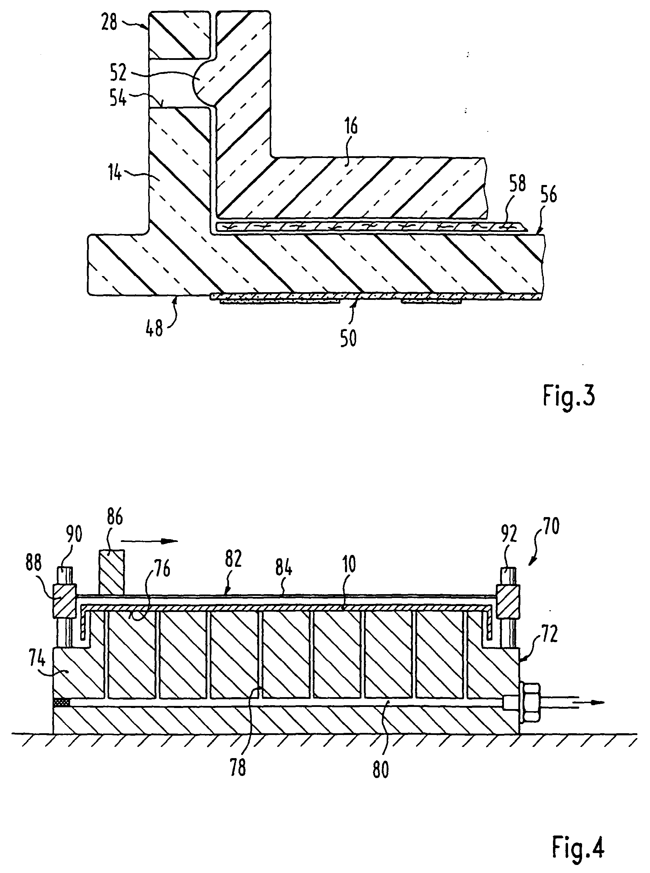

Wie Figur 3 zeigt, ist auch die nach außen zeigende Rückseite 48 des Bodenteils 14 mit einem zweiten Aufdruck 50 versehen. Auch hier besteht der Aufdruck 50 aus der zuvor beschriebenen Farbe und wurde durch ein Siebdruckverfahren auf die Rückseite 48 des Bodenteils 14 gedruckt. In das Bodenteil 14 ist, wie zuvor bereits erläutert wurde, der Einsatz 16 eingelegt, der mit Rastnasen 52 mit an den Seitenwänden 26 und 28 ausgebildeten Rastöffnungen 54 in Eingriff steht, wobei in Figur 3 nur eine der Rastverbindungen an der unteren Seitenwand 28 des Bodenteils 14 gezeigt ist. Zwischen dem Einsatz 16 und der Innenfläche 56 des Bodenteils 14 ist eine bedruckte Inlaycard 58 eingelegt, die mit dem Aufdruck 50 auf der Rückseite 48 des Bodenteils 14 den Eindruck einer dreidimensionalen Darstellung vermittelt. Auch hier ist zu bemerken, daß gegebenenfalls auch die Innenfläche 56 des Bodenteils 14 bedruckt sein kann.

Figur 4 zeigt schließlich eine Einrichtung 70 zum Bedrucken der Kassette 10. Die Einrichtung 70 hat eine Spannstation 72 mit einem Vakuumtisch 74, auf dessen ebener Haltefläche 76 die aufgeklappte Kassette 10 zum Bedrucken aufgelegt wird. Der Vakuumtisch 74 hat ein Leitungssystem, bestehend aus Unterdruckleitungen 78, die an der ebenen Haltefläche 76 enden und über eine gemeinsame Versorgungsleitung 80 mit einer Vakuumpumpe in Verbindung stehen. Die Haltefläche 76 hat mehrere Ausnehmungen (nicht dargestellt), in die die Seitenwände 26 und 28 des Bodenteils 14 und die Seitenkanten 32 und 34 des Deckels 24 aufgenommen sind, so daß das Bodenteil 14 mit seiner Innenfläche 56 und der Deckel 24 mit seiner Innenseite 44 auf der Haltefläche 76 unmittelbar aufliegen.

Über der Spannstation 72 ist eine Siebdruckstation 82 angeordnet, die aus einem Drucksieb 84 und einer entlang des Drucksiebes 84 beweglichen Rakel 86 gebildet ist, mit der die Farbe durch das Drucksieb 84 auf die zu bedruckenden Flachseiten des Bodenteils 14 und des Deckels 24 der Kassette 10 gedrückt wird. Das Drucksieb 84 ist mit seinem Rahmen 88 auf an der Haltefläche 76 befestigte Zentrierzapfen 90 und 92 aufgesteckt, damit während des Bedruckens der Kassette 10 das Drucksieb 84 in einer vorgegebenen Position gehalten ist und kein Druckversatz auftreten kann.

Zum Bedrucken der Kassette 10 wird die Kassette 10 ohne Einsatz 16 auf die Haltefläche 76 des Vakuumtisches 74 in der oben beschriebenen Weise plaziert und anschließend die Vakuumpumpe angeschaltet. Durch den in den Unterdruckleitungen 78 wirkenden Unterdruck wird die Kassette 10 auf die Haltefläche 76 gesogen und liegt an dieser mit ihrem Bodenteil 14 und ihrem Deckel 24 eben an. Anschließend wird das Drucksieb 84 auf die zu bedruckenden Flachseiten abgesenkt und die aufzutragende Farbe mit Hilfe der Rakel 86 durch das Gewebe des Drucksiebes 84 auf die Flachseiten gedruckt.

Um die Kassette 10 mit verschiedenen Farben zu bedrucken, kann das Drucksieb 86 durch ein zweites Drucksieb ersetzt werden, in dessen Gewebe der aufzudruckenden Farbe entsprechend eine andere Druckschablone ausgebildet ist. Alternativ kann die Kassette 10 der Druckstation 82 entnommen und nach dem Aushärten der Farbe in eine identisch ausgebildete weitere Druckstation eingelegt werden, in der die Kassette 10 mit einer weiteren Farbe bedruckt wird. Ferner ist es denkbar, mehrere Spannstationen vorzusehen, die an einem gemeinsamen, sich drehenden Transporttisch befestigt sind, der die einzelnen Spannstationen an den verschiedenen Druckstationen vorbeiführt, in denen die Kassetten 10 aufeinander folgend mit den verschiedenen Farben bedruckt werden.

Nach dem Bedrucken der Kassette 10 werden das Booklet 46 und die Inlaycard 58 in die Kassette 10 eingelegt und anschließend der Einsatz 16 mit dem Bodenteil 14 verrastet. Abschließend wird die Compact Disc 12 in die Kassette 10 eingesetzt und die Kassette 10 in bekannter Weise für den Versand vorbereitet.

### Bezugszeichenliste:

- 10: Kassette
- 12: Compact Disc
- 14: Bodenteil
- 16: Einsatz
- 18: Zapfenanordnung
- 20: federnde Segmente
- 22: Zentrieröffnung
- 24: Deckel
- 26: Seitenwand
- 28: Seitenwand
- 30: Zapfen
- 32: Seitenkante
- 34: Seitenkante
- 36: Öffnung
- 38: Vorderseite
- 40: Aufdruck
- 42: Lasche
- 44: Innenseite
- 46: Booklet
- 48: Rückseite
- 50: Aufdruck
- 52: Rastnase
- 54: Rastöffnung
- 56: Innenfläche
- 58: Inlaycard
- 70: Einrichtung
- 72: Spannstation
- 74: Vakuumtisch
- 76: Haltefläche
- 78: Unterdruckleitungen
- 80: Versorgungsleitung
- 82: Siebdruckstation
- 84: Drucksieb
- 86: Rakel
- 88: Rahmen
- 90: Zentrierzapfen
- 92: Zentrierzapfen

## Patentansprüche

1. Kassette aus Kunststoff zur Aufnahme mindestens eines Informationsträgers (12), insbesondere einer Compact Disc oder einer Digital Versatile Disc, mit einem zu öffnenden Deckel (24) und einem Boden (14), wobei zumindest auf einer der Flachseiten (38, 44; 48, 56) des Deckels (24) und/oder des Bodens (14) ein farbiger Aufdruck (40; 50) vorgesehen ist, dadurch **gekennzeichnet,** daß der Aufdruck (40; 50) ein chemisch ausgehärtetes Bindemittel enthält, in dem die Farbpigmente eingebettet sind und das zumindest teilweise mit der Kunststoffoberfläche der bedruckten Flachseite (38, 44; 48, 56) vernetzt ist.

2. Kassette nach Anspruch 1, dadurch **gekennzeichnet,** daß das Bindemittel durch Polymerisation oder durch Polyaddition ausgehärtet ist.

3. Kassette nach Anspruch 1 oder 2, dadurch **gekennzeichnet,** daß das ausgehärtete Bindemittel ein Polyesteracrylat, ein Epoxidacrylat oder ein Polyurethanacrylat ist.

4. Kassette nach Anspruch 1, 2 oder 3, dadurch **gekennzeichnet,** daß der Deckel (24) und/oder der Boden (14) aus einem transparenten Kunststoffmaterial, vorzugsweise Polystyrol gefertigt ist bzw. sind.

5. Kassette nach einem der Ansprüche 1 bis 4, dadurch **gekennzeichnet,** daß der vorzugsweise transparente Deckel (24) zwei von seiner Innenseite (44) abstehende, parallel mit Abstand zueinander verlaufende Seitenkanten (32; 34) hat, wobei von jeder Seitenkante (32, 34) mindestens eine in Richtung der gegenüberliegenden Seitenkante (34, 32) zeigende Lasche (42) so absteht, daß zwischen der Lasche (42) und der Innenseite (44) des Deckels (24) ein Spalt zur Aufnahme einer bedruckten Einlage (46) gebildet ist.

6. Kassette nach einem der vorhergehenden Ansprüche, dadurch **gekennzeichnet** daß in den vorzugsweise transparenten Boden (14) ein mit diesem lösbar verbundener Einsatz (16) eingelegt ist, der in seinem Zentrum eine aus mehreren federnden Segmenten (20) gebildete Zapfenanordnung (18) zum Halten des scheibenförmigen Informationsträgers (12) hat und der so mit Abstand zu der Innenfläche (56) des Bodens (14) angeordnet ist, daß zwischen der Innenfläche (56) des Bodens (14) und dem Einsatz (16) ein Zwischenraum zur Aufnahme einer bedruckten zweiten Einlage (58) gebildet ist.

7. Verfahren zum Bedrucken einer aus Kunststoff gefertigten Kassette (10), in der mindestens ein Informationsträgers (12), insbesondere eine Compact Disc oder eine Digital Versatile Disc, aufgenommen werden kann, bei dem die Kassette (10) mit einer zähflüssigen Farbe bedruckt und die aufgedruckte Farbe anschließend ausgehärtet wird, dadurch **gekennzeichnet,** daß das Aushärten der Farbe durch eine chemische Reaktion des die Farbpigmente enthaltenden Bindemittels der Farbe erfolgt, wobei sich das Bindemittel mit dem Kunststoff der Kassette (10) fest verbindet.

8. Verfahren nach Anspruch 7, dadurch **gekennzeichnet,** daß die Kassette nach dem Bedrucken mit UV-Licht bestrahlt wird.

9. Verfahren nach Anspruch 7 oder 8, dadurch **gekennzeichnet,** daß dem Bindemittel ein Photoinitiator beigemengt ist, und daß zum Aushärten des Bindemittels die Kassette (10) mit elektromagnetischer Strahlung bestrahlt wird, die einen Zerfall des Photoinitiators bewirkt, dessen Zerfallsprodukte das chemische Aushärten des Bindemittels auslösen.

10. Verfahren nach Anspruch 7, 8 oder 9, dadurch **gekennzeichnet,** daß dem Bindemittel vor dem Bedrucken ein reaktiver Verdünner beigemengt wird, dessen Anteil bezogen auf die Gesamtfarbmenge zwischen 1 und 5 Gewichtsprozenten liegt.

11. Verfahren nach einem der Ansprüche 7 bis 10, dadurch **gekennzeichnet,** daß die Kassette (10) durch ein Siebdruckverfahren oder ein Tampondruckverfahren bedruckt wird.

12. Verfahren nach einem der Ansprüche 7 bis 11, dadurch **gekennzeichnet,** daß die Kassette (10) nach dem Aushärten des Bindemittels mit einem weiteren Aufdruck versehen wird.

13. Einrichtung zum Bedrucken der Flachseite (38, 44; 48, 56) eines Deckels (24) und/oder eines Bodens (14) einer Kassette (10), die zur Aufnahme mindestens eines Informationsträgers (12), insbesondere einer Compact Disc oder einer Digital Versatile Disc, dient, wobei die Einrichtung (70) eine Druckstation (82) und eine in der Druckstation (82) angeordnete Spannstation (72) hat, in der der Deckel (24) und/oder der Boden (14) der Kassette (10) während des Bedruckens gehalten werden, dadurch **gekennzeichnet,** daß die Spannstation (72) ein Vakuumtisch (74) mit einer ebenen Haltefläche (76) ist, in dem mehrere mit einer Unterdruckquelle verbundene Vakuumkanäle (78) ausgebildet sind, die an der Haltefläche (76) des Vakuumtisches (74) enden, auf der der Deckel (24) und/oder der Boden (14) der Kassette (10) zum Bedrucken mit seiner jeweiligen, der zu bedruckenden Flachseite (38, 44; 48, 56) entgegengesetzten Flachseite positionierbar ist.

14. Einrichtung nach Anspruch 13, dadurch **gekennzeichnet,** daß die Druckstation eine Siebdruckstation (82) mit mindestens einem auf die zu bedruckende Flachseite positionierbaren Drucksieb (84) und einer Rakel (86) ist, die die auf der der zu bedruckenden Flachseite (38, 44; 48, 56) abgewandten Rückseite des Drucksiebes (84) aufgebrachte Druckfarbe durch das Drucksieb (84) drückt.
